Europäisches Patentamt

European Patent Office

Office européen des brevets

(19)

(11) Veröffentlichungsnummer: **0 312 689**

**A1**

(12) **EUROPÄISCHE PATENTANMELDUNG**

(21) Anmeldenummer: 88108446.1

(22) Anmeldetag: 27.05.88

(51) Int. Cl.4: **F24H 1/28 , F24H 6/00**

(30) Priorität: 19.10.87 DE 3735321

(43) Veröffentlichungstag der Anmeldung:
26.04.89 Patentblatt 89/17

(84) Benannte Vertragsstaaten:
AT BE CH ES FR IT LI NL SE

(71) Anmelder: **Viessmann, Hans, Dr.**
**Im Hain 24**
**D-3559 Battenberg/Eder(DE)**

(72) Erfinder: **Viessmann, Hans, Dr.**
**Im Hain 24**
**D-3559 Battenberg/Eder(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**D-6450 Hanau 7(DE)**

(54) **Heizungskessel.**

(57) Der Heizkessel besteht aus einem wasserführenden Gehäuse (I), in dem eine sich im wesentlichen horizontal erstreckende Brennkammer (11) angeordnet ist, von deren hinteren Boden mehrere Heizgaszugtaschen (13) zu einer Rauchgassammelkammer mit Abgasabzugsstutzen (5') führen. Um den Fertigungsaufwand für einen solchen Heizkessel soweit wie möglich zu reduzieren und zu vereinfachen, sind die gegeneinander gerichteten Anschlußstege 2 und ihrer Tiefe (T) identischen, preßverformten Schalen (3, 4) gebildet. Die Schale (4) weist dabei eine Abzugsöffnung auf, während die kesselgehäuseseitige, eine querschnittsentsprechende Öffnung (6) der Gehäuserückwand (7) eingesetzte Schale (3) Tascheneinsatzschlitze (8) aufweist. Eine zur kesselseitigen Schale (3) identische Schale (9) bildet dabei den Boden (10) der Brennkammer (11).

Fig.1

EP 0 312 689 A1

### Heizkessel

Die Erfindung betrifft einen Heizkessel, insbesondere für die Verbrennung gasförmiger Brennstoffe, der gemäß Oberbegriff des Hauptanspruches ausgebildet ist.

Derartige Heizkessel, bei denen also die abziehenden Heiz- bzw. Rauchgase ohne Umkehrumlenkung zum Abgasstutzen unter Passage von Heizgaszugtaschen strömen, sind bspw. nach der DE-U-82 19 423 bekannt. Die Fertigung derartiger Heizkessel ist insofern als aufwendig anzusehen, als für die Tascheneinbindung der Boden der Brennkammer und ebenso die Rückwand des wasserführenden Gehäuses mit entsprechenden Schlitzen versehen werden müssen und die Einbindung der Taschen unmittelbar nur in Verbindung mit der Gehäuserückwand bzw. dem ganzen wasserführenden Gehäuse durchgeführt werden kann. Der mit Schlitzen zu versehende Brennkammerboden hat dabei zwangsläufig eine andere Form als die ebenfalls mit Schlitzen zu versehende Gehäuserückwand, so daß für diese Teile unterschiedliche Stanzwerkzeuge benutzt werden müssen.

Der Erfindung liegt demgemäß die Aufgabe zugrunde, einen Heizkessel der eingangs genannten Art dahingehend zu verbessern, daß insbesondere der Werkzeug- und Montageaufwand reduziert bzw. vereinfacht werden kann und zwar mit der Maßgabe, trotz taschenförmiger Ausbildung der Heizgaszüge sämtliche heizgasführenden Teile nach vorheriger Zusammenfügung als in sich geschlossene Einheit in das Kesselgehäuse einfügen zu können.

Diese Aufgabe ist mit einem Heizkessel der eingangs genannten Art nach der Erfindung durch die im Kennzeichen des Hauptanspruches angeführten Merkmale gelöst. Vorteilhafte Weiterbildungen ergeben sich nach den Unteransprüchen.

Durch diese erfindungsgemäße Ausbildung des Heizkessels kommt man praktisch und vorteilhaft mit nur einem Form- und Stanzwerkzeug für die Herstellung sowohl des Brennkammerbodens als auch der anderen beteiligten Schalen aus, und ferner können sämtliche Teile des Heizkessels, die an der Flamm- bzw. Heizgasführung beteiligt sind, trotz Taschenausbildung vor Einbau in das Kesselgehäuse bequem zusammengefügt und dann als Einheit in das Kesselgehäuse eingebaut werden. Ferner kann dadurch für die Vorder-und Rückwand des wasserführenden Gehäuses praktisch das gleiche Form- und Stanzwerkzeug ausgenutzt werden, da diese mit den gleichen Durchgriffsöffnungen für den Einbau der vorerwähnten Einheit zu versehen sind. Außerdem entfallen weitere Fertigungsvorgänge am Gehäuse zwecks Anbringung einer mit Abzugsöffnung versehenen Sammelkammer hinter den Heizgaszugtaschen, da die Sammelkammer bereits Teil der in das Kesselgehäuse insgesamt einzubauenden Einheit ist.

Durch die weiterbildende Maßgabe, daß die Brennkammer, die Taschen und die Sammelkammer in bezug auf die Horizontale zur Abzugsseite geneigt angeordnet sind und die abzugsseitige Schale an ihrer tiefsten Stelle einen mit ausgepreßten Abflußstutzen aufweist, ist die Möglichkeit eröffnet, einem derartigen Kessel auch ohne weiteres als sogenannten Kondensatheizkessel betreiben zu können. Das erfindungsgemäße Bauprinzip kann auch dann beibehalten und weiter ausgenutzt werden, wenn den Heizgastaschen aus Gründen der Aufrechterhaltung eines Kondensatbetriebes in Zeiten hoher Wärmebedarfsanforderung ein Luft/Abgaswärmetauscher nachgeschaltet werden soll. Dafür ist nämlich dieser nachzuschaltende Wärmetauscher einfach zwischen die sonst die Sammelkammer bildenden Schalen zu integrieren, was noch näher erläutert wird. Ebenfalls unter Ausnutzung des erfindungsgemäßen Bauprinzipes kann dabei dieser Luft/Abgaswärmetauscher unter Ausnutzung der gleichen Werkzeuge für die Herstellung der Schalen gefertigt werden.

Der erfindungsgemäße Heizkessel wird nachfolgend anhand der zeichnerischen Darstellung von Ausführungsbeispielen näher erläutert.

Es zeigt schematisch

Fig. 1 einen Längsschnitt durch den Heizungskessel, in Ausbildung für Kondensatbetrieb;

Fig. 2 eine Ansicht von der Abzugsseite her bei offener Sammelkammer;

Fig. 3 einen Längsschnitt durch den Heizkessel mit zusätzlicher Anordnung eines Luft/Abgaswärmetauschers;

Fig. 4 eine bauliche Einzelheit im Schnitt und

Fig. 5 im Schnitt eine besondere Ausführungsform des Luft/Abgaswärmetauschers.

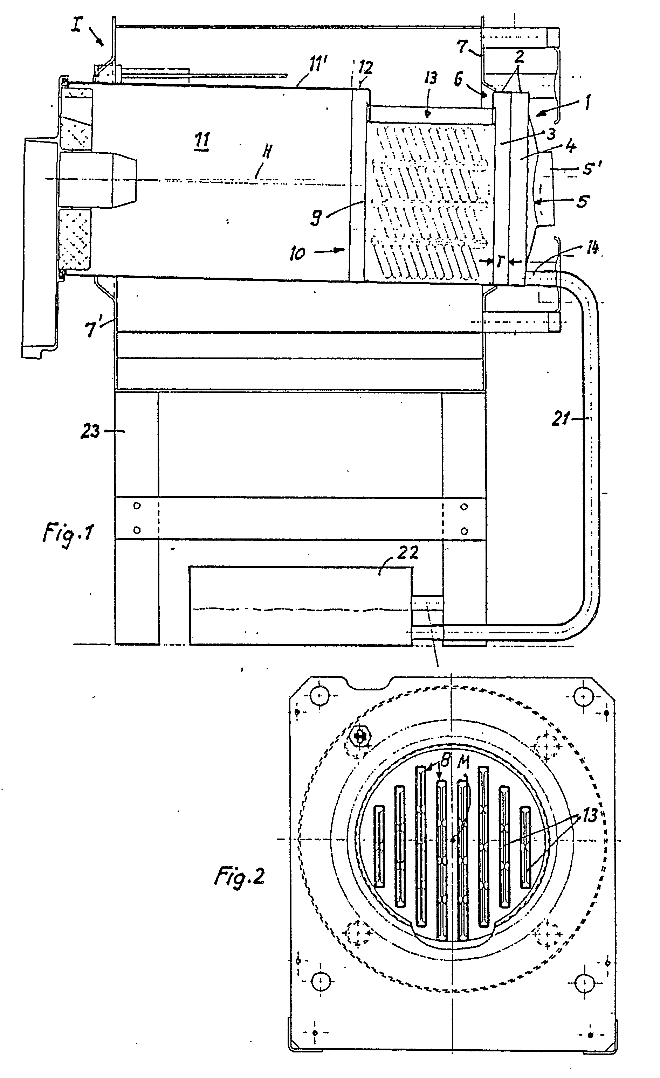

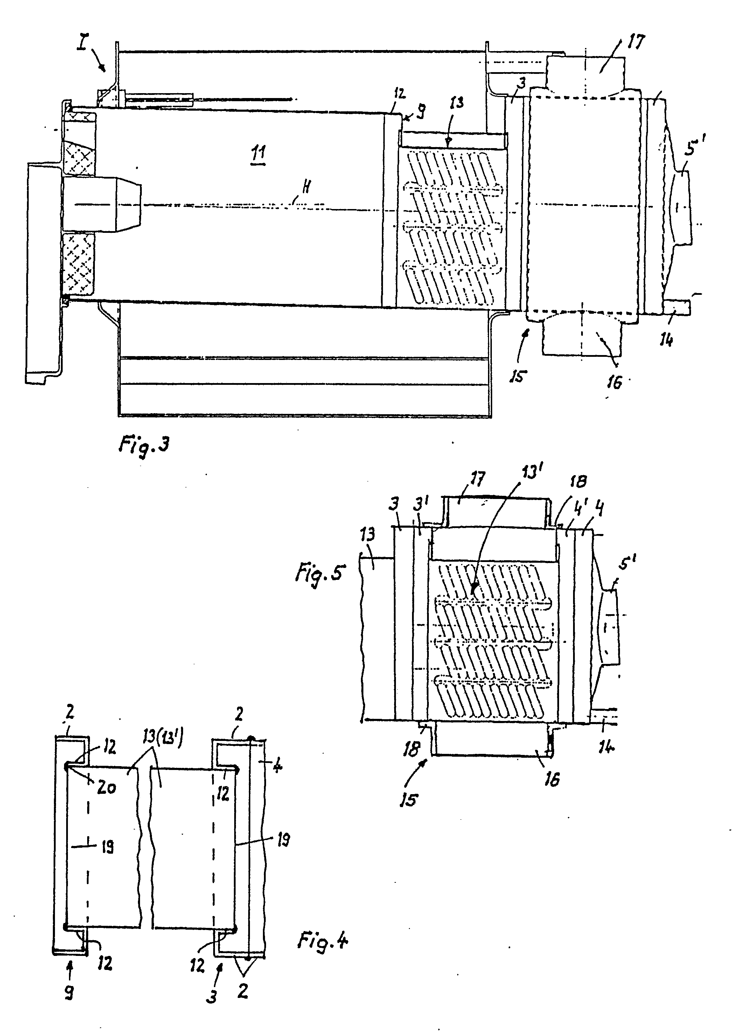

Gemäß Fig. 1 besteht der Heizungskessel in bekannter Weise aus einem wasserführenden Gehäuse I, in dem eine sich im wesentlichen horizontal erstreckende Brennkammer 11 angeordnet ist, von deren hinteren Boden mehrere Heizgaszugtaschen 13 zu einer Rauchgassammelkammer 1 mit Abgasabzugsstutzen führen. In Abkehr von der bisher üblichen Bauweise derartiger Heizkessel ist die Rauchgassammelkammer 1 aus zwei bezüglich ihrer gegeneinander gerichteten Anschlußstege 2 und ihrer Tiefe T identischen, preßverformten Schalen 3, 4 gebildet, wobei an der abzugsseitigen Schale 4 eine Abzugsöffnung 5 angeordnet und diese in Form eines ebenfalls aus der Schale preßverformten Abzugsstutzens 5' ausgebildet ist. Wie dargestellt, kann dieser Schale beim Preßvorgang problemlos und zusätzlich eine Wölbungsverformung als Übergang zum Abzugsstutzen 5' vermittelt werden. An der kesselgehäuseseitigen, eine querschnittsentsprechende Öffnung 6 in der Gehäuserückwand 7 verschließenden Schale sind Tascheneinsatzschlitze 8 angeordnet, und eine zur kesselseitigen Schale 3 identische Schale 9 bildet den Boden der Brennkammer 11. Diese Schale 9 ist mit ihrem umlaufenden Anschlußsteg 12 einfach an das entsprechend bemessene und ausgeformte Wandungsteil 11' der Brennkammer 11 angesetzt und mit dieser gas- und flüssigkeitsdicht verschweißt. Zwischen den Schalen 3 und 9 erstrekken sich die Heizgaszugtaschen 13, die in den Tascheneinsatzschlitzen 8 mit ihren Enden eingesetzt sind. Für diesen Einsatz der Heizgaszugtaschen 13 in die Schlitze 8 sind diese mit umlaufenden, in gleiche Richtung wie die Anschlußstege 2 weisenden Bördelrändern 12 versehen (siehe Fig. 4). Aus der Fig. 4 ist ebenfalls ersichtlich, daß die Endränder 19 der Heizgastaschen 13 in die Schlitze 8 bis zu den Enden 20 der Bördelränder 12 in die Schalen eingeschoben und die Endränder der Taschen 13 und der Bör-delränder 12 dicht miteinander verbunden sind. Diese Ränder liegen völlig offen und können problemlos verschweißt werden, d.h., es werden zunächst die Heizgaszugtaschen 13 bspw. in einer Anordnung gemäß Fig. 2 mit den beteiligten Schalen 3 und 9 zusammengesteckt und verschweißt, wonach das ganze Gebilde mit dem Anschlußsteg 2 der Schale 9 an die Brennkammerwand 11' angesetzt und dann das ganze Gebilde mit der Schale 4 verschlossen wird. Diese ganze Einheit wird entweder von der Rückwand 7 oder von der Vorderwand 7' des Gehäuses I aus in das Gehäuse eingeschoben und mit diesem längs der Öffnungsränder fest verbunden.

Falls ein solcher Kessel für Kondensatbetrieb vorgesehen werden soll, wird das ganze vorbeschriebene Gebilde in bezug auf die Horizontale H zur Abzugsseite geneigt angeordnet, wobei lediglich die abzugsseitig aufzusetzende Schale 4 an ihrer tiefsten Stelle einen mit ausgepreßten Kondensatabflußstutzen 14 aufweist, von dem aus eine Kondensatableitung 21 zu einem im Bereich des Kesselsockels 23 angeordneten Kondensatsammelbehälter 22 führt.

Für eine solche Kondensatbetriebsweise ist es zumindest für Zeiten hoher Wärmebedarfsanforderung wesentlich, daß auch dann nach Möglichkeit eine Vollkondensation gewährleistet bleibt, die in Rücksicht auf die dann gegebenen höheren Rücklauftemperaturen nicht ohne weiteres erreichbar ist. Für diesen Zweck ist es bereits bekannt, Kondensatheizkesseln Luft/Abgaswärmetauscher nachzuschalten, um durch Einleitung von Kaltluft in den Wärmetauscher die Abgase in ausreichendem Maße abkühlen und damit zur Kondensation bringen zu können. Für die Kombination mit einem solchen Luft/Abgaswärmetauscher ist nun die vorbeschriebene Ausbildung des Heizkessels besonders gut geeignet, da durch diese Ausbildung ein solcher Wärmetauscher mit minimalem Aufwand in den Kessel integriert werden kann. Hierzu wird auf Fig. 3 verwiesen, aus der hervorgeht, daß für diesen Fall lediglich die Schalen 3, 4 nicht mehr unmittelbar miteinander verbunden werden, sondern unter Zwischenschaltung des Luft/Abgaswärmetauschers 15. Gemäß Fig. 5 ist dabei vorteilhaft der Luftwärmetauscher 15 ebenfalls aus zwei zur kesselseitigen Schale 3 identischen Schalen 3', 4' gebildet, und diese sind mit ihren Anschlußstegen 2 einerseits an die kesselseitige und andererseits an die abzugsseitige Schale 3, 4 angeschlossen. Zwischen den Schalen 3', 4' erstrecken sich dann genau wie beim vorbeschriebenen eigentlichen Abzugsbereich des Heizkessels Abgaspassagetaschen 13', deren Wärmetauschfläche mindestens der der Heizgaszugtaschen 13 entspricht. Um die Abgaspassagetaschen 13' zwischen den Schalen 3', 4' nach außen abzuschließen und eine gezielte Luftdurchströmung zu erreichen, ist an den Anschlußstege 2 der Schalen 3', 4' eine den Taschenbereich umfassende, mit Lufteintritts- und -austrittsstutzen 16, 17 versehene Umschließungswand 18 angeordnet. Insbesondere für diese Ausführungsform des Kessels ist es nicht unbedingt zwingend, die kesselseitige Schale nun unbedingt mit den gleichen Außenabmessungen wie die Schale 9 zu versehen, sondern es ist auch ohne weiteres möglich, dies, allerdings mit einem etwas größeren Werkzeugaufwand, den Kessel derart auszubilden, daß die kesselseitige Schale 3 und die abzugsseitige Schale 4 im Querschnitt größer bemessen sind als die den Brennkammerboden bildende Schale 9, wobei die kesselseitige Schale 3 in bezug auf die den Brennkammerboden bildende Schale 9 identische Schlitze 8 aufweist, die insgesamt entweder mittig zum Schälenzentrum M oder nach oben oder unten exzentrisch versetzt angeordnet sind.

Diese Ausführungsform käme insbesondere dann in Frage, wenn die Unterbringung einer entsprechend großen Wärmeübertragungsfläche im Luft/Abgaswärmetauscher nicht auf Kosten von dessen Länge, sondern durch einen größeren Durchmesser des Gehäuses des Wärmetauschers 15 unterbringbar sein soll. Die Verbindung der Abzugspassagetaschen 13' mit den Schalen 3', 4' erfolgt bei diesem Wärmetauscher in der gleichen Weise wie in Fig. 4 dargestellt.

## Ansprüche

1. Heizkessel, bestehend aus einem wasserführenden Gehäuse, in dem eine sich im wesentlichen horizontal erstreckende Brennkammer angeordnet ist, von deren dem Brenner gegenüber angerodneten Boden mehrere Heizgaszugtaschen zu einer Rauchgassammelkammer mit Abgasabzugsstutzen führen,

**dadurch gekennzeichnet,**

daß die Rauchgassammelkammer (1) aus zwei bezüglich ihrer gegeneinander gerichteten Anschlußstege (2) und ihrer Tiefe (T) identischen, preßverformten Schalen (3,4) gebildet ist, wobei an der abzugsseitigen Schale (4) eine Abzugsöffnung (5) angeordnet ist und an der kesselgehäuseseitigen, eine querschnittsentsprechende Öffnung (6) in der Gehäuserückwand (7) verschließenden Schale (3) Tascheneinsatzschlitze (8) angeordnet sind und eine zur kesselseitigen Schale (3) identische Schale (9) den Boden (10) der Brennkammer (11) bildet.

2. Heizkessel nach Anspruch 1,

**dadurch gekennzeichnet,**

daß die beiden identisch geschlitzten Schalen (3, 9) längs ihrer Schlitze (8) mit umlaufenden, in gleicher Richtung wie die Anschlußstege (2) weisenden Bördelrändern (12) versehen sind.

3. Heizkessel nach Anspruch 1 oder 2, insbesondere zur Verwendung als Kondensatheizkessel,

**dadurch gekennzeichnet,**

daß die Brennkammer (11), die Taschen (13) und die Sammelkammer (1) in bezug auf die Horizontale (H) zur Abzugsseite geneigt angeordnet sind und die abzugsseitige Schale (4) an ihrer tiefsten Stelle einen mit ausgepreßten Kondensatabflußstutzen (14) aufweist.

4. Heizkessel nach Anspruch 3,

**dadurch gekennzeichnet,**

daß zwischen den beiden, die Sammelkammer (1) bildenden Schalen (3, 4) ein Luft/Abgaswärmetauschergehäuse (15) angeordnet und mit den Anschlußstegen (2) der beiden Schalen (3, 4) gasdicht verbunden ist.

5. Heizkessel nach Anspruch 3 oder 4,

**dadurch gekennzeichnet,**

daß die kesselseitige Schale (3) und die abzugsseitige Schale (4) im Querschnitt größer bemessen sind als die den Brennkammerboden bildende Schale (9), wobei die kesselseitige Schale (3) in bezug auf die den Brennkammerboden bildende Schale (9) identische Schlitze (8) aufweist, die insgesamt entweder mittig zum Schalenzentrum (M) oder nach oben oder unten exzentrisch versetzt angeordnet sind.

6. Heizkessel, insbesondere nach Anspruch 4 oder 5,

**dadurch gekennzeichnet,**

daß der Luftwärmetauscher (15) ebenfalls aus zwei zur kesselseitigen Schale (3) identischen Schalen (3′, 4′) gebildet ist und diese mit ihren Anschlußstegen (2) einerseits an die kesselseitige und andererseits an die abzugsseitige Schale (3, 4) angeschlossen sind, wobei sich zwischen den Schalen (3′, 4′) Abgaspassagetaschen (13′) erstrecken, deren Wärmetauschfläche mindestens der der Heizgaszugtaschen (13) entspricht, und wobei, angesetzt an den Anschlußstegen (2) der Schalen (3′, 4′), eine den Taschenbereich umfassende, mit Lufteintritts und -austrittsstutzen (16, 17) versehene Umschließungswand (18) angeordnet ist.

7. Heizkessel nach einem der Ansprüche 1 bis 6,

**dadurch gekennzeichnet,**

daß die Endränder (19) der Abzugstaschen (13) und der Abzugspassagetaschen (13′) in die Schlitze (8) bis zu den Enden (20) der Bördelränder (12) in die Schalen (3, 9; 3′, 4′) eingeschoben und mindestens die Endränder der Taschen (13, 13′) und der Bördelränder (12) dicht miteinander verbunden sind.

8. Heizkessel nach einem der Ansprüche 1 bis 7,

**dadurch gekennzeichnet,**

daß die Abzugsöffnung (5) der Schale (4) in Form eines aus der Schale preßverformten Abzugsstutzens (5′) ausgebildet ist.

EP 0 312 689 A1

Fig.1

Fig.2

**Fig.3**

**Fig.5**

**Fig.4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-U-8 219 423 (BUDERUS AG) --- | | F 24 H 1/28 F 24 H 6/00 |
| A | DE-A-3 533 863 (BUDERUS AG) * Figur * --- | 1 | |
| A | BE-A- 651 186 (AB SVENSKA) * Figur 5 * --- | 1,3 | |
| A | FR-A- 427 387 (CALORIE) * Figur 1 * --- | 1 | |
| A | EP-A-0 195 383 (VIESSMANN) * Zusammenfassung * ----- | 1,4 | |

**RECHERCHIERTE SACHGEBIETE (Int. Cl.4)**

F 24 H

Der vorliegende Recherchenbericht wurde für alle Patentansprüche erstellt

| Recherchenort | Abschlußdatum der Recherche | Prüfer |
|---|---|---|
| DEN HAAG | 03-01-1988 | VAN GESTEL H.M. |

EPO FORM 1503 03.82 (P0403)